# EUROPÄISCHE PATENTSCHRIFT

(11) **EP 1 407 848 B1**
(45) Veröffentlichungstag und Bekanntmachung des Hinweises auf die Patenterteilung: **27.10.2010**
(21) Anmeldenummer: 03019900.4
(22) Anmeldetag: 02.09.2003
(51) Int. Cl.: B23G 5/00

(54) **Gewindewerkzeug mit Kühlmittelzufuhr**
Thread cutting tool with cooling
Outil de filetage avec refroidissement

(30) Priorität: 08.10.2002 DE 10246871
(43) Veröffentlichungstag der Anmeldung: 14.04.2004
(73) Patentinhaber: Sandvik Intellectual Property AB, 811 81 Sandviken (SE)
(72) Erfinder: Giessler, Josef, 77796 Mühlenbach (DE)
(74) Vertreter: Weber, Roland

(56) Entgegenhaltungen:
- DE-A- 3 307 555
- FR-A- 1 068 255
- US-A- 2 388 022
- US-A- 4 693 646
- US-A- 4 762 444
- US-A- 5 993 120

## Beschreibung

Die vorliegende Erfindung betrifft ein Gewindewerkzeug zum Herstellen von Gewinden, insbesondere zum Schneiden von Innengewinden.

Der Begriff "Gewindewerkzeug" soll dabei sowohl Gewindeschneidwerkzeuge, z. B. Gewindebohrer oder Gewindefräser, als auch Gewindeformwerkzeuge, sogenannte Gewindeformer, umfassen, soweit sie jeweils für die Herstellung von Innengewinden vorgesehen sind. In beiden Fällen wird das Werkzeug in eine bereits bestehende Kernbohrung bzw. Kernlochbohrung eingebracht, um das Innengewinde auszubilden.

Beim Gewindeformen wird das Gewinde in die Kernbohrung eingeformt. D.h. es kommt zu einer Aufweichung des Werkstoffes (plastische Verformung) und der Werkstoff umfließt die Zähne des Gewindeformers und bildet das charakteristische Gewindeprofil aus. Das Gewindeformen ist ein umformendes Fertigungsverfahren ohne Spanbildung. Außerdem kann durch die Verformung meist eine glattere und festere Oberfläche erzielt'werden, da mit der Verformung eine Materialverdichtung verbunden ist.

Beim Gewindebohren wird das Gewindeschneidwerkzeug mit einem auf seine Drehzahl genau abgestimmten Vorschub in die Bohrung eingedreht, wobei die Schneidzähne, die in mehreren im wesentlichen parallel verlaufenden Gruppen (Schneidstollen genannt) angeordnet sind, die Gewindegänge schneiden. Bei einem eingängigen Gewinde entspricht dabei der Abstand der in axialer Richtung jeweils hintereinander angeordneten Schneidzähne einer Gruppe genau der Gewindesteigung bzw. der Höhe eines Gewindeganges.

Das Gewindewerkzeug weist im allgemeinen einen Schaft bzw. ein Schaftteil und ein Gewindeteil bzw. Schneidenabschnitt auf. Das Gewindeteil weist an der Umfangsfläche spiralförmige umlaufende Gewindegänge auf. Beim Gewindebohrer sind die Gewindegänge in axialer Richtung von Spannuten unterbrochen.

Das Gewindeteil der Gewindewerkzeuge besteht meist aus einem Anschnitt und einem Führungsteil. Der Anschnitt ist mit einem sich verjüngendem Querschnitt ausgestaltet und übernimmt den Hauptteil der Zerspanung bzw. der Verformung. Das Führungsteil dient im wesentlichen nur der Führung und weist keine oder nur eine sehr geringe Verjüngung auf.

Bei diesen Werkzeugen wird häufig mit einem Kühlmittel bzw. Kühlschmiermittel gearbeitet, das die Reibung zwischen Werkzeug und Werkstück reduzieren soll, Prozeßwärme von der Kontaktstelle wegführen soll, für einen guten Spantransport sorgen soll und eine gute Oberflächenqualität erzielen soll. Das Kühlmittel kann auf verschiedenste Weise zugeführt werden, wird aber meist über die Spannuten wieder abgeführt. Zur Abführung des Kühlmittels bzw. Kühlschmiermittels sind daher auch die Gewindegänge des Gewindeformers in axialer Richtung durch Nuten, den sogenannten Schmiernuten, unterbrochen. Da die Schmiernuten aber lediglich der Abfuhr des Kühlmittels und nicht dem Abtransport von Spänen dienen, können die Schmiernuten im Vergleich zu den Spannuten von Gewindeschneidwerkzeugen weniger tief und gegebenenfalls auch weniger breit ausgebildet sein.

Bei den Gewindewerkzeugen ist die Zuführung des Kühlmittels oder Kühlschmiermittels nicht einfach, da während des Schneidvorgangs das Werkzeug nahezu vollständig vom zu bearbeitenden Material umschlossen ist. Somit sind die von dem Gewindeteil gebildeten Schneiden im allgemeinen von außen nicht zugänglich. Um daher das erforderliche Kühlmittel an den Zerspanungsort zu leiten, sind im Stand der Technik zwei unterschiedliche Verfahren bzw. Werkzeuge bekannt.

Bei dem ersten Verfahren erfolgt die Kühlmittelzufuhr axial. Dies bedeutet, daß sich im Zentrum des Werkzeugs eine durchgehende axial verlaufende Kühlmittelbohrung befindet. Wird dieses Werkzeug in ein als Grund- bzw. Sackloch ausgebildete Kernbohrung eingebracht, so fließt das aus dem axialen Kühlmittelkanal austretende Kühlmittel zunächst in das Grundloch. Nachdem das Grundloch mit Kühlmittel gefüllt ist, drängt das durch den axial verlaufenden Kühlmittelkanal nachfließende Kühlmittel das Kühlmittel an dem Werkzeug vorbei und durch die Span- oder Schmiernuten aus dem Grundloch heraus. Dabei kommt es zu einer effektiven Abfuhr der während des Spanvorgangs entstandenen Späne.

Es ist offensichtlich, daß solche Gewindewerkzeuge nur bei Grundlochgewinden eingesetzt werden können, da bei Durchgangslöchern das Kühlmittel die Schneiden nicht erreichen würde, sondern einfach durch das Durchgangsloch hindurch strömen würde.

Bei dem zweiten Verfahren ist eine radiale Kühlmittelzuführung vorgesehen. Zwar weist das Werkzeug in diesem Fall ebenfalls eine zentrale Bohrung auf, die einen axial verlaufenden Kühlmittelkanal bildet. Dieser Kanal erstreckt sich jedoch nicht bis zur Stirnseite des Werkzeugs. Es wird also entweder eine Sacklochbohrung vorgesehen oder zunächst eine durchgehende Bohrung erzeugt, welche dann stirnseitig wieder verschlossen wird. Zusätzlich werden bei diesen Werkzeugen Radialbohrungen vorgesehen, die sich von der Umfangsfläche des Werkzeuges bis zu dem zentralen axial verlaufenden Kühlmittelkanal erstrecken.

Typischerweise sind die Radialbohrungen so angeordnet, daß sie jeweils den zentral verlaufenden Kühlmittelkanal mit einer Spannut bzw. Schmiernut verbinden.

Bei den bekannten Werkzeugen verlaufen die radial verlaufenden Kühlmittelbohrungen nicht senkrecht zu der axialen Bohrung, sondern sind nach vom, d.h. zur Stirnseite des Werkzeuges hin geneigt. Dies hat im wesentlichen zwei Gründe. Zum einen kann dadurch das Kühlmittel in Richtung des Anschnitts geleitet werden, da in diesem Bereich, wie bereits ausgeführt wurde, der Hauptteil der Zerspanung bzw. Verformung und damit auch der Hauptteil der Wärmeentwicklung anfällt. Zum anderen wird so die Schwächung des Werkzeugkemquerschnitts, die mit dem Vorsehen von radial verlaufenden Kanälen zwangsläufig verbunden ist, reduziert.

Mit beiden bisher bekannten Ausführungsformen sind jedoch erhebliche Nachteile verbunden. Bei der axialen Zuführung des Kühlmittels ist der Anwendungsbereich auf Grundlochgewinde beschränkt, da bei Durchgangslöchern das Kühlmittel die Schneiden nicht erreichen würde.

Die Ausführungsform mit der radialen Kühlmittelzufuhr ist zwar vielseitig einsetzbar, jedoch sehr aufwendig und daher teuer, da die Herstellung der im allgemeinen sehr kleinen Radialbohrungen nur durch Fräsen in Kombination mit Bohren oder Erudieren möglich ist.

Außerdem führen die radial verlaufenden Bohrungen, auch wenn sie in Richtung der Stirnfläche des Werkzeuges geneigt sind, zu einer erheblichen Schwächung des Querschnitts und damit des Werkzeugs. Im schlimmsten Fall kann dies zu einem Werkzeugbruch im Bereich der Radialbohrungen führen.

Darüber hinaus ist bei der üblicherweise verwendeten Neigung der radial verlaufenden Kühlmittelbohrungen der Kühlmittelstrahl entgegengesetzt zum Spanfluß ausgerichtet. Dies führt zwangsläufig bei Gewindeschneidwerkzeugen zu einer mangelhaften Spanabfuhr. Zudem erfolgt keine ausreichende Versorgung des Führungsteils mit Kühlschmiermittel.

Die DE 33 07 555 beschreibt ein Bdhrungs-Nachbearbeitungswerkzeug, das zumindest einen innenliegenden, durch die Werkzeugspitze austretenden Schmier- oder Kühlmittelkanal besitzt. Weiterhin ist eine die Kühlkanalmündung in der Spitze des Werkzeuges teilweise übergreifende Kappe zur Umlenkung des aus dem Kühlmittelkanal austretenden Kühlmittelstrahls vorgesehen.

Ausgehend von diesem Stand der Technik liegt der vorliegenden Erfindung die Aufgabe zugrunde, ein Gewindewerkzeug mit einem Gewindeteil mit mindestens einer Spannut oder Schmiernut und einem axial verlaufenden Kühlkanal, der sich im wesentlichen bis zur Stirnseite des Werkzeugs erstreckt, bereitzustellen, das einfach herzustellen ist, eine lange Standzeit aufweist, d.h. bei dem insbesondere die Gefahr des Werkzeugbruchs deutlich reduziert ist, das sowohl beim Gewindebohren eines Durchgangslochs als auch bei einem Grundlochgewinde einsetzbar ist und bei dem die Zuführung des Kühl- bzw. Kühlschmiermittels so erfolgt, daß ein Spanfluß nicht behindert, sondern unterstützt wird und bei dem das Kühl- bzw. Kühlschmiermittel sowohl Anschnitt als auch Führungsteil ausreichend versorgt.

Diese Aufgabe wird erfindungsgemäß durch ein Gewindewerkzeug gemäß Anspruch 1 gelöst. Ein solches Werkzeug ist sehr einfach herzustellen, da lediglich eine axial verlaufende Bohrung in das Werkzeug eingebracht werden muß. Insoweit unterscheidet sich das erfindungsgemäße Werkzeug nicht von dem Werkzeug des Standes der Technik mit axialer Kühlmittelzuführung. Zusätzlich ist jedoch erfindungsgemäß ein Umlenkelement vorgesehen, mit dessen Hilfe das Kühlmittel, nachdem es aus dem axial verlaufenden Kühlmittelkanal stirnseitig ausgetreten ist, in radialer Richtung umgelenkt wird.

Das Umlenkelement ist eine an der Stirnseite des Gewindewerkzeugs befestigte Scheibe. Das Kühlmittel tritt dann im Gebrauch in axialer Richtung aus dem Kühlkanal aus und wird an der Umlenkscheibe radial nach außen umgelenkt und erreicht die Span- bzw. Schmiernuten. Das erfindungsgemäße Gewindewerkzeug kann daher auch bei Durchgangsbohrungen verwendet werden.

Mit Vorteil hat das Umlenkelement zumindest im Bereich der Span- bzw. Schmiernuten eine Ausdehnung in radialer Richtung, d.h. senkrecht zu der Werkzeugachse, die sich zumindest bis zum Bohrerkern, vorzugsweise darüber hinaus und besonders bevorzugt bis zum Gewindekemdurchmesser erstreckt.

Mit Vorteil deckt das Umlenkelement an der Stirnfläche des Gewindewerkzeuges die Nuten, d. h. die Spannuten oder die Schmiernuten, zumindest teilweise ab. Besonders bevorzugt erstreckt sich das Umlenkelement bis zu dem Gewindekerndurchmesser aber nicht darüber hinaus. Dadurch wird sicher gestellt, daß nur ein geringer Teil des Kühlmittels - im Idealfall sogar gar kein Kühlmittel - in axialer Richtung nach vorne, d.h. in die Kernbohrung hinein, fließt. Mit anderen Worten wird sicher gestellt, daß nahezu das gesamte Kühlmittel über die Span- bzw. Schmiernuten an dem Werkzeug vorbei über Anschnitt und Führungsteil geleitet wird. Wenn sich das Umlenkelement über den Gewindekemdurchmesser hinaus erstreckt, hat dies - abhängig von dem gewählten Kernbohrungsdurchmesser - meist zur Folge, daß das Umlenkelement während des Arbeitsvorganges mit dem Werkstück in Eingriff treten kann, was bei einigen Anwendungen von Nachteil ist.

Um eine möglichst gute Versorgung des Gewindeteils mit Kühlmittel sicherzustellen, ist vorgesehen, daß an der Stirnseite des Bohrers ein Durchgang zwischen dem Kühlkanal und zumindest einer Spannut oder Schmiernut besteht. Dieser Durchgang kann beispielsweise aus einer Rille bestehen, die in die Stirnseite des Gewindewerkzeugs eingefräst worden ist. Das den axialen Kühlkanal verlassende Kühlmittel fließt dann zwischen dem Umlenkelement und der Stirnseite des Gewindeteils radial nach außen, wobei durch den mindestens einen Durchgang sichergestellt ist, daß eine genügend große Menge von Kühlmittel bzw. Kühlschmiermittel im Bereich der Span- bzw. Schmiernut radial nach außen transportiert wird. Mit Vorteil verläuft der Durchgang zwischen axialem Kühlkanal und Span- bzw. Schmiemut in etwa senkrecht zur Werkzeuglängsachse bzw. zu dem axial verlaufenden Kühlkanal. Bei dieser Ausführungsform kann das Umlenkelement direkt auf die Stirnfläche des Gewindewerkzeuges aufgesetzt werden.

In einer besonders zweckmäßigen Ausführungsform weist die Umlenkscheibe zumindest eine Vertiefung auf. Die Vertiefungen dienen dazu, den Kühlmittelfluß bzw. den Kühlschmiermittelfluß entsprechend zu lenken. Dadurch kann der Kühlmittelfluß sehr genau eingestellt werden. Die Vertiefungen können beispielsweise durch Einpressungen gebildet werden. Alternativ oder in Kombination ist es aber auch möglich, die Vertiefungen durch in die Umlenkscheibe eingebrachte Nuten oder Rillen zu verwirklichen. Die Vertiefungen sind mit Vorteil rotationssymmetrisch um die Kühlkanalachse angeordnet. Beispielsweise kann zumindest eine Vertiefung kreisringförmig sein. Selbstverständlich können auch Mulden gebildet werden, die entsprechend der Lage der Span- bzw. Schmiernuten angeordnet sind, um eine möglichst effiziente Umlenkung des Kühlschmierstoffs auf die Span- bzw. Schmiernuten zu gewährleisten.

In einer weiteren bevorzugten Ausführungsform ist das Umlenkelement an dem Gewindeteil befestigt, vorzugsweise angeschweißt, besonders bevorzugt mittels Punktschweißen befestigt. Dadurch wird die Herstellung des erfindungsgemäßen Gewindewerkzeugs noch weiter vereinfacht, da Gewindeteil und Umlenkelement getrennt gefertigt werden können und danach einfach aneinander befestigt werden können.

Es hat sich gezeigt, daß das erfindungsgemäße Gewindewerkzeug in einer besonders zweckmäßigen Ausführungsform als Gewindeformer ausgebildet ist. Selbstverständlich kann es aber auch mit Vorteil als Grundloch-Gewindebohrer ausgebildet sein.

Das Gewindeteil besteht vorzugsweise aus Hartmetall, insbesondere aus HSS(E). Es versteht sich, daß das Umlenkelement in den meisten Fällen aus einem weicheren Material bestehen kann, da bei einigen Ausführungsformen der vorliegenden Erfindung nicht vorgesehen ist, daß das Umlenkelement mit dem Werkstück in Eingriff tritt. Das Umlenkelement ist vielmehr vorzugsweise derart dimensioniert, daß es ohne Berührung des Werkstücks in das vor der eigentlichen Gewindeherstellung gebohrte Kemloch eintauchen kann.

Mit Vorteil hat die Umlenkscheibe daher einen Durchmesser, der im wesentlichen dem Gewindekerndurchmesser entspricht.

Weitere Vorteile, Merkmale und Anwendungsmöglichkeiten werden deutlich anhand der folgenden Beschreibung bevorzugter Ausführungsformen sowie der dazugehörigen Figuren. Es zeigen:
- Figur 1: eine schematische Darstellung einer Ausführungsform eines Gewindebohrers des Standes der Technik,
- Figur 2: eine schematische Längsschnittansicht einer ersten Ausführungsform der vorliegenden Erfindung sowie eine stirnseitige Draufsicht und
- Figur 3: eine schematische Darstellung eines Teils eines Längsschnitts durch einen Gewindebohrer gemäß einer zweiten Ausführungsform der vorliegenden Erfindung.

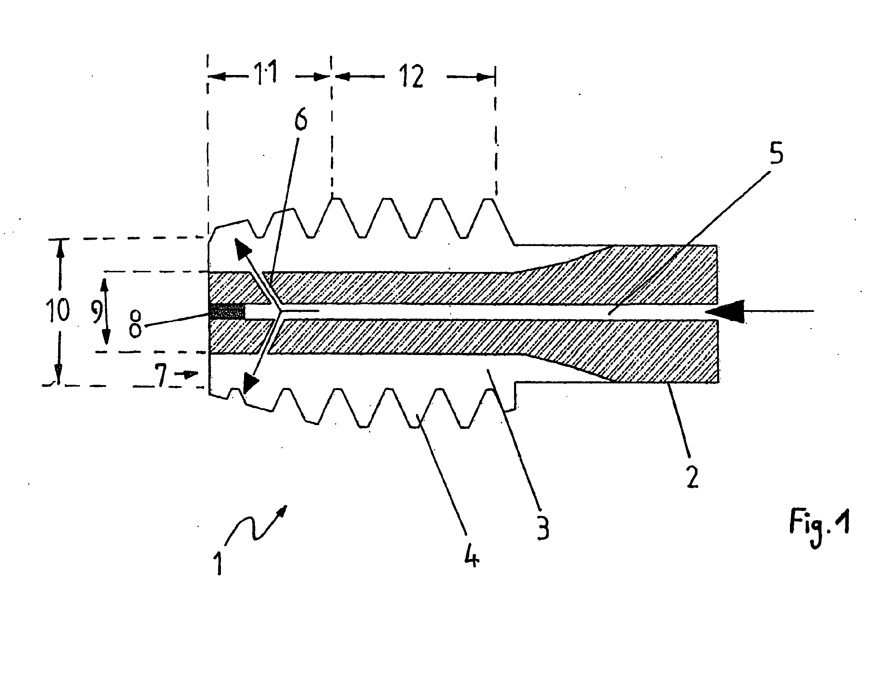

In Figur 1 ist ein Gewindebohrer des Standes der Technik in einer Längsschnittansicht gezeigt. Der Gewindebohrer 1 weist einen Schaft auf, an dessen einem Ende ein Gewindeteil 11, 12 angeordnet ist. Das Gewindeteil 11, 12 besteht wiederum aus einem Anschnitt 11 und einem Führungsteil 12. Das Gewindeteil weist spiralförmig angeordnete Gewindezähne 4 auf, die durch mehrere Span- bzw. Schmiernuten 3 unterbrochen sind. Weiterhin ist ein Kühlkanal 5, 6 vorgesehen, durch den Kühlmittel entlang den Pfeilrichtungen transportiert werden kann. Der Kühlmittelkanal 5, 6 besteht aus einem axial verlaufenden Teil 5 und mehreren radial verlaufenden Kanälen 6. Der axial verlaufende Teil 5 des Kühlkanals 5, 6 ist hier zunächst als durchgängige Bohrung gefertigt worden und anschließend mit Hilfe des Einsatzes 8 verschlossen worden. Die radial verlaufenden Bohrungen 6 verbinden jeweils den axial verlaufenden Teil 5 des Kühlkanals mit einer Span- bzw. Schmiernut.

Deutlich zu erkennen ist, daß die radial verlaufenden Kühlkanäle 6 nicht völlig senkrecht zu dem axial angeordneten Kühlkanal 5 angeordnet sind, sondern in Richtung der Stirnseite bzw. Stirnfläche 7 geneigt sind. Dies hat im wesentlichen zwei Gründe. Zum einen wird durch die entsprechende Umlenkung des Kühlmittels sichergestellt, daß auch der Anschnittbereich 11 ausreichend mit Kühlmittel versorgt wird. Zum anderen würde eine Anordnung des Radialkanals 6 senkrecht zu dem axial verlaufenden Kanal 5 eine entsprechend ausgeprägte Schwächung des Querschnitts bzw. Kerns des Bohrers nach sich ziehen, so daß insbesondere beim Ansetzen des Werkzeugs die Gefahr des Bohrerbruchs an der Stelle des geschwächten Querschnitts besteht. In der Figur 1 ist zu erkennen, daß der Bohrerkern 9 im wesentlichen durch die Tiefe der Span- bzw. Schmiernuten 3 gebildet wird. Mit der Bezugszahl 10 ist der Gewindekerndurchmesser bezeichnet. Dieser wird durch den Nutgrund der Gewindenuten 4 bestimmt.

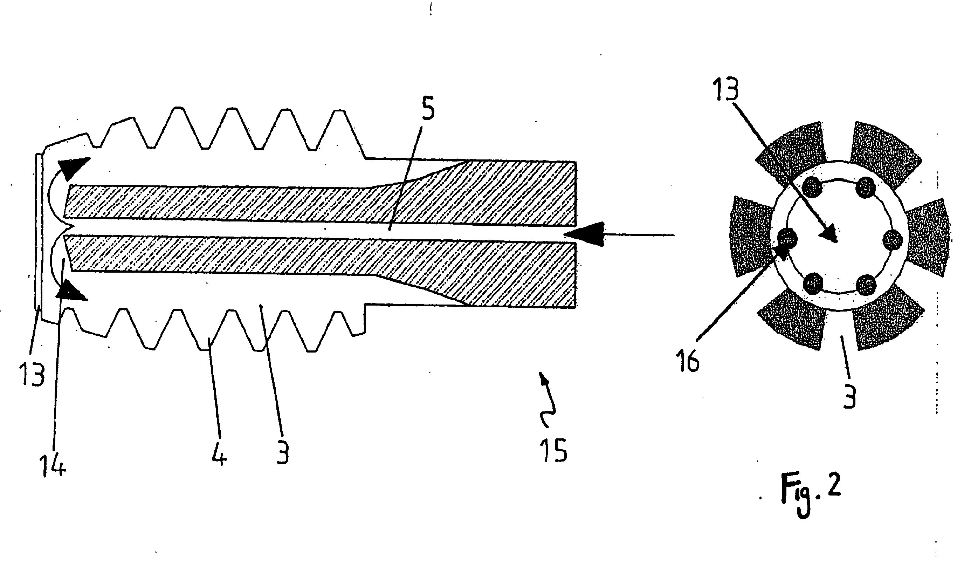

In Figur 2 ist eine erste Ausführungsform eines erfindungsgemäßen Gewindebohrers dargestellt. Links in Figur 2 ist eine schematische Längsschnittansicht gezeigt, die der Ansicht von Figur 1 entspricht. Auch hier weist das Werkzeug einen axial verlaufenden Kühlmittelkanal 5 auf. Dieser ist jedoch als durchgehende Bohrung ausgebildet, d.h. er erstreckt sich bis zur Stirnseite 7 des Bohrers. An der Stirnseite 7 des Bohrers ist ein Umlenkelement 13 vorgesehen, das hier als Scheibe ausgebildet ist. Das Kühlmittel, das in Richtung der in Figur 2 gezeigten Pfeile fließt, strömt somit zunächst durch den axialen Kühlmittelkanal 5 und trifft dann auf das Umlenkelement 13. Von diesem wird das Kühlmittel nach außen in radiale Richtung umgelenkt. Deutlich zu erkennen ist, daß stirnseitig der axiale Kühlmittelkanal 5 mit den Spannuten 3 über Durchgänge 14 verbunden ist. Diese Durchgänge 14 können beispielsweise durch Einfräsen von Rillen in die Stirnseite des Gewindebohrers vor der Befestigung des Umlenkelements 13 verwirklicht werden. Bei dem erfindungsgemäßen Bohrer 15 kommt es somit nicht zu einer Schwächung des Querschnitts.

Es sei an dieser Stelle ausdrücklich darauf hingewiesen, daß die Durchgänge 14 direkt an der Bohrerspitze angeordnet sind, wobei der Gewindebohrer 15 mit der Stirnfläche im normalen Betrieb nicht mit dem Werkstück in Eingriff tritt.

Die erfindungsgemäße Anordnung des Umlenkelements 13 hat den Vorteil, daß das Gewindewerkzeug deutlich einfacher herzustellen ist und daß der Kühlmittelfluß nun so erfolgt, daß die Spanabfuhr unterstützt wird. Mit Blick auf Figur 1 wird deutlich, daß bei dem in Figur 1 dargestellten Bohrwerkzeug des Standes der Technik die reibungslose Spanabfuhr nicht immer gewährleistet ist, da aufgrund der Neigung der radialen Kühlmittelkanäle 6 nach vorn, d.h. in Richtung der Stirnfläche 7 das Kühlmittel dem Spanfluß entgegen gerichtet ist.

In Figur 2 rechts ist eine Draufsicht auf die Stirnseite 7 des Gewindebohrers 15 zu sehen. Man erkennt die Umlenkscheibe 13, die mittels Punktschweißungen 16 am Bohrerkern befestigt ist. Zu erkennen sind ebenfalls die Spannuten 3.

Des weiteren ist zu sehen, daß sich die Umlenkscheibe 13 über den Bohrerkern hinaus bis zu dem Gewindekerndurchmesser 10 erstreckt. Die Umlenkscheibe 13 dichtet daher im Betrieb die Kernbohrung ab, so daß (nahezu) kein Kühlmittel aus dem axialen Kühlkanal 5 zwischen Umlenkscheibe 13 und Werkstück bzw. der Innenwand der Kernbohrung hindurchtreten kann, sondern das gesamte Kühlmittel radial umgelenkt wird und gezwungen ist, über die Span- bzw. Schmiernuten an der Umfangsfläche des Gewindewerkzeugs vorbei zu strömen.

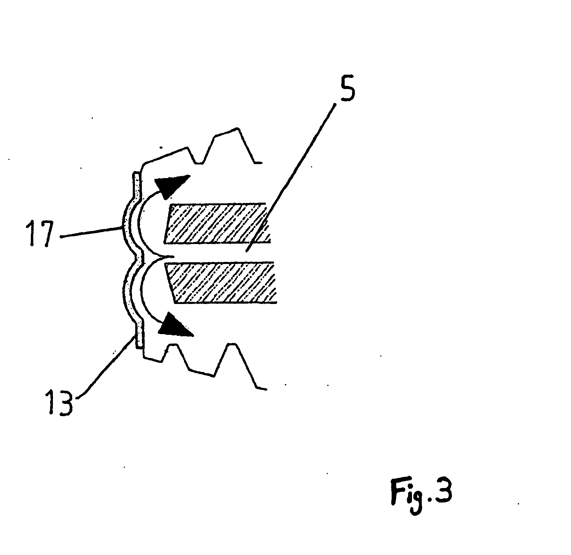

In Figur 3 ist eine zweite Ausführungsform des erfindungsgemäßen Gewindewerkzeugs gezeigt. Hier ist die Umlenkscheibe 13 mit Vertiefungen 17 versehen, die für eine optimale Umlenkung des Kühlmittels sorgen, das durch den axial verlaufenden Kühlmittelkanal auf die Umlenkscheibe 13 trifft.

### Bezugszeichenliste:

- 1: Gewindebohrer
- 2: Schaft
- 3: Span- bzw. Schmiernuten
- 4: Gewinde
- 5: Kühlkanal (axial verlaufender Teil)
- 6: radial verlaufende Kühlkanäle
- 7: Stirnseite bzw. -fläche
- 8: Einsatz
- 9: Bohrerkern
- 10: Gewindekerndurchmesser
- 11: Anschnitt
- 12: Führungsteil
- 13: Umlenkelement
- 14: Durchgänge
- 15: Gewindebohrer
- 16: Punktschweißungen
- 17: Vertiefungen

## Patentansprüche

1. Gewindewerkzeug mit einem Gewindeteil (4) mit mindestens einer Spannut oder Schmiernut (3) und einem axial verlaufenden Kühlkanal (5), der sich im wesentlichen bis zur Stirnseite (7) des Werkzeugs erstreckt, wobei ein Umlenkelement (13) vorgesehen ist, das derart angeordnet ist, daß aus dem axial verlaufenden Kühlkanal (5) ausströmendes Kühlmittel am Umlenkelement (13) radial nach außen umgelenkt wird, **dadurch gekennzeichnet, daß** das Umlenkelement (13) eine an der Stirnseite (7) des Gewindewerkzeugs (15) befestigte Scheibe (13) ist und an der Stirnseite (7) des Gewindewerkzeugs ein Durchgang (14) zwischen dem Kühlkanal (5) und zumindest einer Span- oder Schmiernut (3) besteht.

2. Gewindewerkzeug nach Anspruch 1, **dadurch gekennzeichnet, daß** das Umlenkelement (13) zumindest im Bereich der Span- bzw. Schmiernuten eine Ausdehnung in radialer Richtung, d.h. senkrecht zu der Werkzeugachse, hat, die sich zumindest bis zum Bohrerkern, vorzugsweise darüber hinaus und besonders bevorzugt bis zum Gewindekerndurchmesser erstreckt.

3. Gewindewerkzeug nach Anspruch 1 oder 2, **dadurch gekennzeichnet, daß** das Umlenkelement (13) in einer Draufsicht auf die Stirnfläche des Gewindewerkzeuges die mindestens eine Spannut oder Schmiernut zumindest teilweise abdeckt.

4. Gewindewerkzeug nach einem der Ansprüche 1 bis 3, **dadurch gekennzeichnet, daß** sich das Umlenkelement in radialer Richtung bis zu dem Gewindekerndurchmesser, vorzugsweise jedoch nicht darüber hinaus erstreckt.

5. Gewindewerkzeug nach einem der Ansprüche 1 bis 4, **dadurch gekennzeichnet, daß** das Umlenkelement (13) zumindest eine Vertiefung (17) aufweist.

6. Gewindewerkzeug nach Anspruch 5, **dadurch gekennzeichnet, daß** die Vertiefungen (17) rotationssymmetrisch um die Kühlkanalachse (5) angeordnet sind.

7. Gewindewerkzeug nach Anspruch 5 oder Anspruch 6, **dadurch gekennzeichnet, daß** zumindest eine Vertiefung (17) kreisringförmig ist.

8. Gewindewerkzeug nach einem der Ansprüche 1 bis 7, **dadurch gekennzeichnet, daß** die Umlenkscheibe (13) einen Durchmesser hat, der kleiner oder vorzugsweise im wesentlichen gleich dem Gewindekerndurchmesser (10) ist.

9. Gewindewerkzeug nach einem der Ansprüche 1 bis 8, **dadurch gekennzeichnet, daß** das Umlenkelement (13) an dem Gewindeteil (4) befestigt ist, vorzugsweise angeschweißt, besonders bevorzugt mittels Punktschweißungen (16) befestigt ist.

10. Gewindewerkzeug nach einem der Ansprüche 1 bis 9, **dadurch gekennzeichnet, daß** das Gewindeteil (4) aus einem Anschnitt (11) und einem Führungsteil (12) besteht.

11. Gewindewerkzeug nach einem der Ansprüche 1 bis 10, **dadurch gekennzeichnet, daß** es als Gewindeformer ausgebildet ist.

12. Gewindewerkzeug nach einem der Ansprüche 1 bis 11, **dadurch gekennzeichnet, daß** es als Grundloch-Gewindebohrer ausgebildet ist.

13. Gewindewerkzeug nach einem der Ansprüche 1 bis 12, **dadurch gekennzeichnet, daß** das Gewindeteil (4) aus Hartmetall, vorzugsweise aus HSS(E) besteht.

## Claims

1. Threaded tool with a thread part (4) with at least one flute or oil groove (3) and an axially running cooling channel (5) which extends essentially to the end surface (7) of the tool, wherein a diversion element (13) is provided which is arranged such that coolant flowing out of the axially running cooling channel (5) is diverted radially outwards at the diversion element (13), **characterized in that** the diversion element (13) is a disk (13) secured to the end surface (7) of the threaded tool (15) and a passage (14) is provided on the end surface (7) of the threaded tool between the cooling channel (5) and at least one flute or oil groove (3).

2. Threaded tool according to claim 1, **characterized in that** the diversion element (13), at least in the area of the flutes or oil grooves, is radially extended, i.e. perpendicular to the tool axis which extends at least to the drill core, preferably beyond it, and particularly preferably up to the thread core diameter.

3. Threaded tool according to claim 1 or 2, **characterized in that** the diversion element (13) at least partially covers the at least one flute or oil groove in a top view onto the end surface of the threaded tool.

4. Threaded tool according to one of claims 1 to 3, **characterized in that** the diversion element extends in a radial direction up to the thread core diameter, but preferably not beyond it.

5. Threaded tool according to one of claims 1 to 4, **characterized in that** the diversion element (13) has at least one recess (17).

6. Threaded tool according to claim 5, **characterized in that** the recesses (17) are arranged rotation-symmetrically about the cooling channel axis (5).

7. Threaded tool according to claim 5 or claim 6, **characterized in that** at least one recess (17) is circular.

8. Threaded tool according to one of claims 1 to 7, **characterized in that** the diversion disk (13) has a diameter which is smaller than or preferably essentially equal to the thread core diameter (10).

9. Threaded tool according to one of claims 1 to 8, **characterized in that** the diversion element (13) is secured to the thread part (4), preferably welded, particularly preferably by means of spot welds (16).

10. Threaded tool according to one of claims 1 to 9, **characterized in that** the thread part (4) consists of a gate (11) and a guide part (12).

11. Threaded tool according to one of claims 1 to 10, **characterized in that** it is constructed as a thread former.

12. Threaded tool according to one of claims 1 to 11, **characterized in that** it is constructed as a bottom hole screw tap.

13. Threaded tool according to one of claims 1 to 12, **characterized in that** the thread part (4) consists of hard metal, preferably HSS(E).

## Revendications

1. Outil de filetage comportant une partie de filetage (1) qui possède au moins une rainure à copeaux ou une rainure de lubrification (3) et un canal de refroidissement axial (5) qui s'étend sensiblement jusqu'à la face frontale (7) de l'outil, un élément de déviation (13) étant prévu qui est disposé de telle sorte que du fluide de refroidissement s'écoulant du canal de refroidissement axial (5) est dévié radialement vers l'extérieur au niveau de l'élément de déviation, **caractérisé en ce que** l'élément de déviation (13) est un disque (13) qui est fixé à la face frontale (7) de l'outil de filetage (15) et, au niveau de la face frontale (7) de l'outil de filetage, un passage (14) est ménagé entre le canal de refroidissement (5) et au moins une rainure à copeaux ou de lubrification (3).

2. Outil de filetage selon la revendication 1, **caractérisé en ce que** l'élément de déviation (13) a, au moins dans la région des rainures à copeaux ou de lubrification, une dimension dans une direction axiale, c'est-à-dire perpendiculaire à l'axe de l'outil, qui s'étend au moins jusqu'à l'âme de la mèche, avantageusement au-delà et notamment de préférence jusqu'au diamètre de l'âme de la mèche.

3. Outil de filetage selon la revendication 1 ou 2, **caractérisé en ce que** l'élément de déviation (13) recouvre au moins partiellement, dans une vue de dessus de la surface frontale de l'outil de filetage, l'au moins une rainure à copeaux ou rainure de lubrification.

4. Outil de filetage selon l'une des revendications 1 à 3, **caractérisé en ce que** l'élément de déviation s'étend dans une direction radiale jusqu'au diamètre de l'âme de la mèche, avantageusement cependant pas au-delà de celle-ci.

5. Outil de filetage selon l'une des revendications 1 à 4, **caractérisé en ce que** l'élément de déviation (13) comporte au moins un creux (17).

6. Outil de filetage selon la revendication 5, **caractérisé en ce que** les creux (17) sont disposés en symétrie de révolution autour de l'axe du canal de refroidissement (5).

7. Outil de filetage selon la revendication 5 ou la revendication 6, **caractérisé en ce qu'**au moins un creux (17) a une forme d'anneau circulaire.

8. Outil de filetage selon l'une des revendications 1 à 7, **caractérisé en ce que** le disque de déviation (13) a un diamètre qui est inférieur ou avantageusement sensiblement égal au diamètre (10) de l'âme de la mèche.

9. Outil de filetage selon l'une des revendications 1 à 8, **caractérisé en ce que** l'élément de déviation (13) est fixé, avantageusement soudé, notamment de préférence fixé par soudage par points 16), à la partie de filetage (4).

10. Outil de filetage selon l'une des revendications 1 à 9, **caractérisé en ce que** la partie de filetage (4) est constituée d'une entrée de filetage (11) et d'une partie de guidage (12).

11. Outil de filetage selon l'une des revendications 1 à 10, **caractérisé en ce qu'**il est conformé en outil à mouler les filets.

12. Outil de filetage selon l'une des revendications 1 à 11, **caractérisé en ce qu'**il est conformé en taraud à trou borgne.

13. Outil de filetage selon l'une des revendications 1 à 12, **caractérisé en ce que** la partie de filetage (4) est en un métal dur, avantageusement en acier rapide de haute qualité (HSS(E)).
